# EUROPEAN PATENT APPLICATION

(11) **EP 4 614 016 A1**
(43) Date of publication of application: **10.09.2025**
(21) Application number: 23897153.5
(22) Date of filing: 25.08.2023
(51) Int. Cl.: F16C 19/36, F16C 33/60, F16C 33/64

(54) **CROSSED ROLLER BEARING AND METHOD FOR MANUFACTURING CROSSED ROLLER BEARING**

(30) Priority: 01.12.2022 JP 2022193027
(71) Applicant: Nippon Thompson Co., Ltd., Tokyo 108-8586 (JP)
(72) Inventor: TAKAYA, Yusuke, Mino-shi, Gifu 501-3763 (JP); MATSUBARA, Yukio, Mino-shi, Gifu 501-3763 (JP)
(74) Representative: Page White Farrer
(86) International application number: PCT/JP2023/030742
(87) International publication number: WO 2024/116493

(57) **Abstract**

Provided is a crossed roller bearing, including: an outer ring made of steel; an inner ring, which is made of steel, has a center axis in common with the outer ring, and is arranged on an inner periphery side of the outer ring; and a plurality of rolling elements arranged so as to be rollable on an inner peripheral surface of the outer ring and an outer peripheral surface of the inner ring. The outer ring has a first rolling surface and a second rolling surface. The inner ring has a third rolling surface and a fourth rolling surface. The rolling elements include: first rollers arranged so as to be rollable on the first rolling surface and the fourth rolling surface; and second rollers arranged so as to be rollable on the second rolling surface and the third rolling surface. At least one of a set of the first rolling surface and the second rolling surface or a set of the third rolling surface and the fourth rolling surface has a surface texture satisfying an aspect ratio Str of 0.2 or more and a root-mean-square height Sq of 0.5 µm or less.

## Description

### Technical Field

The present invention relates to a crossed roller bearing and a method of manufacturing a crossed roller bearing. The present application claims priority based on Japanese Patent Application No. 2022-193027 filed on December 1, 2022, the contents of which are incorporated herein by reference in its entirety.

### Background Art

There has been known a crossed roller bearing including an outer ring and an inner ring each being made up of a pair of plate members (for example, Patent Literature 1). There has been known a ball bearing in which isotropic irregularities are formed on surfaces of rolling portions of an outer ring and an inner ring and a composite coating film containing iron oxide and compound as main components is formed on each of the surfaces (for example, Patent Literature 2).

### Citation List

### Patent Literature

[PTL 1] JP 2019-178735 A
[PTL 2] JP 2019-157978 A

### Summary of Invention

### Technical Problem

There has been a demand for a long-life crossed roller bearing that is easy to maintain. Thus, the present disclosure has one object to provide a long-life crossed roller bearing that is easy to maintain. Further, the present disclosure has one object to provide a method of manufacturing a long-life crossed roller bearing that is easy to maintain.

### Solution to Problem

According to the present disclosure, there is provided a crossed roller bearing, including: an outer ring made of steel; an inner ring, which is made of steel, has a center axis in common with the outer ring, and is arranged on an inner periphery side of the outer ring; and a plurality of rolling elements arranged so as to be rollable on an inner peripheral surface of the outer ring and an outer peripheral surface of the inner ring. The outer ring has: a first rolling surface, which has an annular shape, and forms the inner peripheral surface of the outer ring; and a second rolling surface, which has an annular shape, has a center axis in common with the first rolling surface, and forms the inner peripheral surface of the outer ring. The inner ring has: a third rolling surface, which has an annular shape, has a center axis in common with the first rolling surface, is opposed to the second rolling surface, and forms the outer peripheral surface of the inner ring; and a fourth rolling surface, which has an annular shape, has a center axis in common with the first rolling surface, is opposed to the first rolling surface, is connected to the first rolling surface through a line segment that intersects with a line segment connecting the second rolling surface and the third rolling surface to each other on a cross section including the center axis, and forms the outer peripheral surface of the inner ring. The rolling elements include: first rollers arranged so as to be rollable on the first rolling surface and the fourth rolling surface; and second rollers arranged so as to be rollable on the second rolling surface and the third rolling surface. At least one of a set of the first rolling surface and the second rolling surface or a set of the third rolling surface and the fourth rolling surface has a surface texture satisfying an aspect ratio Str of 0.2 or more and a root-mean-square height Sq of 0.5 µm or less.

According to the present disclosure, there is provided a method of manufacturing a crossed roller bearing, the method including: a step (1) of preparing: an outer ring including, in an inner peripheral surface, a first rolling surface having an annular shape, and a second rolling surface that has an annular shape, and has a center axis in common with the first rolling surface; an inner ring including, in an outer peripheral surface, a third rolling surface having an annular shape, and a fourth rolling surface that has an annular shape, and has a center axis in common with the third rolling surface; and rolling elements being a plurality of rollers; and a step (2) of obtaining a crossed roller bearing by combining the outer ring, the inner ring, and the plurality of rollers. The step (1) of preparing includes: a step (a) of forming the first rolling surface and the second rolling surface by pressing a bright-finished cold-rolled steel plate; or a step (b) of forming the third rolling surface and the fourth rolling surface by pressing a bright-finished cold-rolled steel plate.

### Advantageous Effects of Invention

The above-mentioned crossed roller bearing, which is a crossed roller bearing that has a long life and is easy to maintain, is provided. Further, the above-mentioned method, which is a method of manufacturing a crossed roller bearing that has a long life and is easy to maintain, is provided.

### Brief Description of Drawings

[FIG. 1] FIG. 1 is a schematic perspective view for illustrating a structure of a crossed roller bearing according to the present disclosure.
[FIG. 2] FIG. 2 is a partially enlarged view of a cross section taken along the line II-II of FIG. 1.
[FIG. 3] FIG. 3 is a schematic plan view for illustrating a structure of a crossed roller bearing according to the present disclosure.
[FIG. 4] FIG. 4 is a partially enlarged view of a cross section taken along the line IV-IV of FIG. 3f
[FIG. 5] FIG. 5 is a flowchart for illustrating a flow of a manufacturing method according to the present disclosure.
[FIG. 6] FIG. 6 is a view including laser microscope images of rolling surfaces of crossed roller bearings No. 1 and No. 7 used in an evaluation test.
[FIG. 7] FIG. 7 is a graph for showing decreases in full-width at half-maximum (Δ full-width at half-maximum) of crossed roller bearings No. 1 to No. 7 used in the evaluation test.

### Description of Embodiments

### [Overview of Embodiments]

First, embodiments of the present disclosure are described in order. A crossed roller bearing according to the present disclosure includes: an outer ring made of steel; an inner ring, which is made of steel, has a center axis in common with the outer ring, and is arranged on an inner periphery side of the outer ring; and a plurality of rolling elements arranged so as to be rollable on an inner peripheral surface of the outer ring and an outer peripheral surface of the inner ring. The outer ring has: a first rolling surface, which has an annular shape, and forms the inner peripheral surface of the outer ring; and a second rolling surface, which has an annular shape, has a center axis in common with the first rolling surface, and forms the inner peripheral surface of the outer ring. The inner ring has: a third rolling surface, which has an annular shape, has a center axis in common with the first rolling surface, is opposed to the second rolling surface, and forms the outer peripheral surface of the inner ring; and a fourth rolling surface, which has an annular shape, has a center axis in common with the first rolling surface, is opposed to the first rolling surface, is connected to the first rolling surface through a line segment that intersects with a line segment connecting the second rolling surface and the third rolling surface to each other on a cross section including the center axis, and forms the outer peripheral surface of the inner ring. The rolling elements include: first rollers arranged so as to be rollable on the first rolling surface and the fourth rolling surface; and second rollers arranged so as to be rollable on the second rolling surface and the third rolling surface. At least one of a set of the first rolling surface and the second rolling surface or a set of the third rolling surface and the fourth rolling surface has a surface texture satisfying an aspect ratio Str of 0.2 or more and a root-mean-square height Sq of 0.5 µm or less.

Hitherto, crossed roller bearings have been publicly known. In Patent Literature 1, for example, there is disclosed a crossed roller bearing including an outer ring and an inner ring each being made up of a pair of plate members. Each of the outer ring and the inner ring of the crossed roller bearing has a pair of rolling surfaces with a V-shaped cross section taken in a radial direction. The crossed roller bearing is used under a state in which oil films of grease are formed on the rolling surfaces by injecting the grease into a raceway. However, when the oil films are formed in an unsatisfactory state, surface damage such as peeling may occur on the rolling surfaces. When flaking originated from a damaged portion occurs, the crossed roller bearing may not be able to fulfill functions as a bearing.

Meanwhile, in Patent Literature 2, there is described a ball bearing, which has isotropic irregularities on surfaces of rolling portions of an outer ring and an inner ring, and in which a composite coating film containing iron oxide and compound as main components is formed on each of the surfaces. Patent Literature 2 discloses that a chemical treatment for forming the composite coating film reduces a variation in curvature or vertex height of protrusion shapes of protruding portions of the surface irregularities formed by machining. Patent Literature 2 discloses that this configuration enables achievement of a longer life even when the ball bearing is used under a state in which an oil film formation property is unsatisfactory.

Under such circumstances, a configuration for increasing the life of the crossed roller bearing has been examined. Hitherto, rolling surfaces of a crossed roller bearing have been formed by grinding. In the grinding, a grinding wheel is rotated in a circumferential direction of the rolling surface. Thus, a grinding mark is formed in the circumferential direction of the rolling surface. That is, a related-art crossed roller bearing has a grinding mark formed in the circumferential direction of the rolling surface. Meanwhile, according to the present disclosure, it has been found that a longer life is achieved for a crossed roller bearing by forming rolling surfaces of a crossed roller bearing with an isotropic surface texture, specifically, a surface texture satisfying the following conditions. The crossed roller bearing according to the present disclosure has an aspect ratio Str of 0.2 or more and a root-mean-square height Sq of 0.5 µm or less for at least one of a set of rolling surfaces of an outer ring or a set of rolling surfaces of an inner ring.

In the crossed roller bearing, a rolling surface of the rolling element may have a surface texture satisfying the root-mean-square height Sq of 0.2 µm or less. When the surface texture of the rolling elements satisfies this condition, the progress of fatigue on the rolling surfaces of the outer ring and the inner ring is suppressed to thereby ensure the effect of increasing life.

In the crossed roller bearing, each of the outer ring and the inner ring can be formed of one bent steel plate. Such a crossed roller bearing is an extremely thin and lightweight bearing having the effects described above.

A method of manufacturing a crossed roller bearing according to the present disclosure includes: a step (1) of preparing: an outer ring including, in an inner peripheral surface, a first rolling surface having an annular shape, and a second rolling surface that has an annular shape, and has a center axis in common with the first rolling surface; an inner ring including, in an outer peripheral surface, a third rolling surface having an annular shape, and a fourth rolling surface that has an annular shape, and has a center axis in common with the third rolling surface; and rolling elements being a plurality of rollers; and a step (2) of obtaining a crossed roller bearing by combining the outer ring, the inner ring, and the plurality of rollers. The step (1) of preparing includes: a step (a) of forming the first rolling surface and the second rolling surface by pressing a bright-finished cold-rolled steel plate; or a step (b) of forming the third rolling surface and the fourth rolling surface by pressing a bright-finished cold-rolled steel plate.

With this manufacturing method, a crossed roller bearing with less progress of fatigue on the rolling surfaces, which has a long life and is easy to maintain, can be obtained by a rational manufacturing method.

In the above-mentioned manufacturing method, at least one of a set of the first rolling surface and the second rolling surface or a set of the third rolling surface and the fourth rolling surface of the crossed roller bearing obtained through the step (2) of obtaining the crossed roller bearing may have a surface texture satisfying an aspect ratio Str of 0.2 or more and a root-mean-square height Sq of 0.5 µm or less. Such a configuration ensures the effect of increasing life.

In the above-mentioned manufacturing method, the method may further include:
after the step (a), a step of performing carburizing, quenching, and tempering and then barrel processing on the first rolling surface and the second rolling surface that have been formed by the pressing; or
after the step (b), a step of performing carburizing, quenching, and tempering and then barrel processing on the third rolling surface and the fourth rolling surface that have been formed by the pressing. This manufacturing method ensures the effect of increasing life.

### [Specific Examples of Embodiment]

Next, specific examples of an embodiment of a crossed roller bearing according to the present disclosure are described with reference to the drawings. In the drawings referred to below, the same or corresponding parts or portions are denoted by the same reference symbols, and the description thereof is not repeated.

### (First Embodiment)

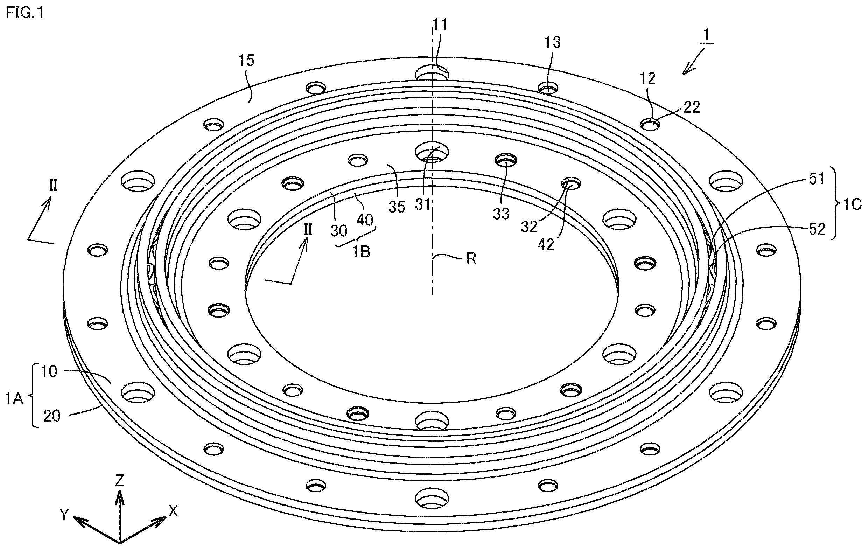

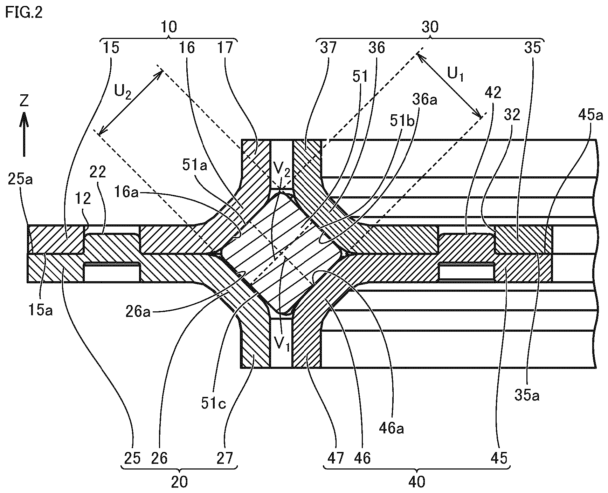

FIG. 1 is a schematic perspective view for illustrating a structure of a crossed roller bearing 1 according to one embodiment of the present disclosure. A Z-axis direction in FIG. 1 is a direction in which a center axis R of the crossed roller bearing 1 extends. FIG. 2 is a partially enlarged sectional view for illustrating a cross section of the crossed roller bearing 1 taken along the line II-II in FIG. 1 in a partially enlarged manner. A plane containing the cross section taken along the line II-II includes a center axis of a first roller described later.

As illustrated in FIG. 1, the crossed roller bearing 1 of the first embodiment includes an outer ring 1A, an inner ring 1B, and rollers 1C corresponding to a plurality of rolling elements. The outer ring 1A and the inner ring 1B are each made of steel. The inner ring 1B is arranged on an inner periphery side of the outer ring 1A. The outer ring 1A and the inner ring 1B are each made of a steel plate processed into a predetermined shape. In this embodiment, steel for forming the outer ring 1A and the inner ring 1B is, for example, SCM415 specified in JIS standards.

The outer ring 1A includes a first outer ring 10 having an annular shape, and a second outer ring 20 having an annular shape. The first outer ring 10 and the second outer ring 20 have the same shape. The first outer ring 10 and the second outer ring 20 are arranged so as to be lined up in the direction of the center axis R. The first outer ring 10 and the second outer ring 20 are fixed to each other.

The inner ring 1B includes a first inner ring 30 having an annular shape, and a second inner ring 40 having an annular shape. The first inner ring 30 and the second ring 40 have the same shape. The first inner ring 30 and the second inner ring 40 are arranged so as to be lined up in the direction of the center axis R. The first inner ring 30 and the second inner ring 40 are fixed to each other.

Specific dimensions of the crossed roller bearing 1 are not limited to any particular dimensions as long as the crossed roller bearing has the effects according to the present disclosure. Typically, an outer diameter of the outer ring 1A may be from about 30 mm to about 150 mm, and an inner diameter of the inner ring 1B may be from about 0 mm to about 120 mm. Further, a thickness in an axial direction may be from about 4 mm to about 15 mm. The crossed roller bearing 1 is a crossed roller bearing in which a dimension in the axial direction is particularly reduced, which is also referred to as "super slim type".

As illustrated in FIG. 1 and FIG. 2, the plurality of rollers 1C are arranged in a raceway path having an annular shape defined by an inner peripheral surface of the outer ring 1A and an outer peripheral surface of the inner ring 1B. The rollers 1C include a plurality of first rollers 51 and a plurality of second rollers 52. The first rollers 51 and the second rollers 52 are arranged alternately in a circumferential direction. The first rollers 51 and the second rollers 52 each have a columnar shape. The first roller 51 and the second roller 52 are made of the same material and have the same dimensions, and are different from each other only in a direction of arrangement. The first rollers 51 and the second rollers 52 are made of steel. The first rollers 51 and the second rollers 52 are made of, for example, SUJ2 specified in JIS standards.

The outer ring 1A is now described. As illustrated in FIG. 1 and FIG. 2, the first outer ring 10 has a first portion 15 extending in a direction orthogonal to the center axis R. The second outer ring 20 has a first portion 25 extending in the direction orthogonal to the center axis R. The first portion 15, 25 is a disc ring shaped portion. The first portion 15 has the same center axis as the center axis R. A plurality of (six in the first embodiment) mounting holes 11 passing in a thickness direction (direction of the center axis R) are formed equiangularly in the first portion 15, 25. When the crossed roller bearing 1 is fixed with respect to an external member, the outer ring 1A is fixed with respect to the external member by, for example, inserting bolts into the mounting holes 11 and screwing the bolts into threaded holes of the external member.

Through holes 12 and protruding portions 13 are formed in the first portion 15 so that a set of the through hole 12 and the protruding portion 13 is positioned between the mounting holes 11. Protruding portions 22 of the second outer ring 20 are fitted into the through holes 12. The protruding portions 13 are fitted into through holes formed in the second outer ring 20, each through hole having the same diameter as that of the through hole 12. Fitted portions may be bonded with an adhesive. Through this configuration, the first outer ring 10 and the second outer ring 20 are fixed to each other. A way of fixing the first outer ring 10 and the second outer ring 20 is not limited to that described above, and may be, for example, fixing using screws or the like.

As illustrated in FIG. 2, the first outer ring 10 includes the first portion 15, a second portion 16, and a third portion 17. The first portion 15, the second portion 16, and the third portion 17 have substantially the same thickness. The third portion 17 may be slightly thinner (for example, by about 0.1 mm to about 0.3 mm) than the first portion 15. The first portion 15 may be thicker than the second portion 16 and the third portion 17. The first portion 15 has a disc ring shape. The second portion 16 has a tubular shape. An outer shape of the second portion 16 is a truncated conical shape. The second portion 16 extends from an inner edge of the first portion 15 so that an inner diameter of the second portion 16 decreases as being away from the first portion 15 in the Z-axis direction. In other words, the second portion 16 has a diameter increasing in a radially outward direction of the crossed roller bearing 1. The second portion 16 has an inner peripheral surface 16a having an annular shape. The inner peripheral surface 16a forms a first rolling surface on which the first rollers 51 are allowed to roll. The inner peripheral surface 16a has the same center axis as the center axis R of the crossed roller bearing 1. The third portion 17 has a cylindrical shape. The third portion 17 has the same center axis as the center axis R of the crossed roller bearing 1. The third portion 17 is connected to an end portion of the second portion 16, which is opposite to the first portion 15 in the Z-axis direction, and extends in the Z-axis direction.

Similarly, the second outer ring 20 includes the first portion 25, a second portion 26, and a third portion 27. The first portion 25 has the same configuration as that of the first portion 15. The second portion 26 has the same configuration as that of the second portion 16. The third portion 27 has the same configuration as that of the third portion 17. The second portion 26 is arranged so as to extend to a side opposite to the second portion 16 of the first outer ring 10 in the Z-axis direction. The second portion 26 has an inner peripheral surface 26a having an annular shape. The inner peripheral surface 26a forms a second rolling surface on which the second rollers 52 are allowed to roll. The third portion 27 is connected to an end portion of the second portion 26, which is opposite to the first portion 25 in the Z-axis direction, and extends to a side opposite to the third portion 17 in the Z-axis direction.

The first outer ring 10 and the second outer ring 20 are fixed to each other at a principal surface 15a of the first portion 15 of the first outer ring 10, and a principal surface 25a of the first portion 25 of the second outer ring 20, which are opposed to each other.

The inner ring 1B is now described. As illustrated in FIG. 1 and FIG. 2, the first inner ring 30 includes a first portion 35 extending in a direction orthogonal to the center axis R. The second inner ring 40 includes a first portion 45 extending in the direction orthogonal to the center axis R. The first portion 35, 45 is a disc ring shaped portion. A plurality of (six in the first embodiment) mounting holes 31 passing in the thickness direction (direction of the center axis R) are formed equiangularly in the first portion 35, 45. When the crossed roller bearing 1 is fixed with respect to an external member, the inner ring 1B is fixed with respect to the external member by, for example, inserting bolts into the mounting holes 31 and screwing the bolts into threaded holes of the external member.

Through holes 32 and protruding portions 33 are formed alternately in the first portion 35 so that a set of the through hole 32 and the protruding portion 33 is positioned between the mounting holes 31. Protruding portions 42 of the second inner ring 40 are fitted into the through holes 32. The protruding portions 33 are fitted into through holes formed in the second inner ring 40, each through hole having the same diameter as that of the through hole 32. Fitted portions may be bonded with an adhesive. Through this configuration, the first inner ring 30 and the second inner ring 40 are fixed to each other. A way of fixing the first inner ring 30 and the second inner ring 40 is not limited to that described above, and may be, for example, fixing using screws or the like.

The first inner ring 30 includes the first portion 35, a second portion 36, and a third portion 37. The first portion 35, the second portion 36, and the third portion 37 have substantially the same thickness. The third portion 37 may be slightly thinner (for example, by about 0.1 mm to about 0.3 mm) than the first portion 35. The first portion 35 may be thicker than the second portion 36 and the third portion 37. A thickness of the first outer ring 10 and a thickness of the first inner ring 30 are equal to each other. The first portion 35 has a disc ring shape. The first portion 35 has the same center axis as the center axis R of the crossed roller bearing 1. The second portion 36 has a tubular shape. An outer shape of the second portion 36 is a truncated conical shape. The second portion 36 extends from an outer edge of the first portion 35 so that an outer diameter of the second portion 36 increases as being away from the first portion 35 in the Z-axis direction. In other words, the second portion 36 has a diameter increasing in a radially outward direction of the crossed roller bearing 1.

The second portion 26 has an outer peripheral surface 36a having an annular shape. The outer peripheral surface 36a forms a third rolling surface on which the second rollers 52 are allowed to roll. The outer peripheral surface 36a has the same center axis as the center axis R of the crossed roller bearing 1. The third portion 37 has a cylindrical shape. The third portion 37 has the same center axis as the center axis R of the crossed roller bearing 1. The third portion 37 is connected to an end portion of the second portion 36, which is opposite to the first portion 35 in the Z-axis direction.

Similarly, the second inner ring 40 includes the first portion 45, a second portion 46, and a third portion 47. The first portion 45 has the same configuration as that of the first portion 35. The second portion 46 has the same configuration as that of the second portion 36. The third portion 47 has the same configuration as that of the third portion 37. The second portion 46 is arranged so as to extend to a side opposite to the second portion 36 of the first inner ring 30 in the Z-axis direction. The second portion 46 has an outer peripheral surface 46a having an annular shape. The outer peripheral surface 46a forms a fourth rolling surface on which the first rollers 51 are allowed to roll. The third portion 47 is connected to an end portion of the second portion 46, which is opposite to the first portion 45 in the Z-axis direction, and extends to a side opposite to the third portion 47 in the Z-axis direction.

The first inner ring 30 and the second inner ring 40 are fixed to each other at a principal surface 35a of the first portion 35 of the first inner ring 30, and a principal surface 45a of the first portion 45 of the second inner ring 40, which are opposed to each other.

The inner peripheral surface 16a (first rolling surface) of the first outer ring 10 and the outer peripheral surface 46a (fourth rolling surface) of the second inner ring 40 are arranged so as to be opposed and in parallel to each other. Further, the inner peripheral surface 26a of the second outer ring 20 and the outer peripheral surface 36a of the first inner ring 30 are arranged so as to be opposed and in parallel to each other. On a cross section including the center axis R, a line segment V₁ that connects the inner peripheral surface 16a and the outer peripheral surface 46a to each other intersects with (is orthogonal to) a line segment V₂ that connects the inner peripheral surface 26a and the outer peripheral surface 36a to each other.

The rollers 1C are now described. As illustrated in FIG. 2, the first roller 51 has an outer peripheral surface 51a having a cylindrical shape and end surfaces 51b and 51c, each having a circular shape, at both ends of the outer peripheral surface 51a. In the first roller 51, a relationship between a diameter U₁ of a columnar shape and a length U₂ in the axial direction is represented by U₂<U₁. The outer peripheral surface 51a of the first roller 51 is in contact with the inner peripheral surface 16a (first rolling surface) of the first outer ring 10 and the outer peripheral surface 46a (fourth rolling surface) of the second inner ring 40, and the first rollers 51 roll on the inner peripheral surface 16a and the outer peripheral surface 46a. The second roller 52 (FIG. 1) has the same shape as that of the first roller 51. A cylindrical outer peripheral surface of the second roller 52 is in contact with the inner peripheral surface 26a (second rolling surface) of the second outer ring 20 and the outer peripheral surface 36a (third rolling surface) of the first inner ring 30, and the second rollers 52 roll on the inner peripheral surface 26a and the outer peripheral surface 36a.

A surface texture of the crossed roller bearing 1 is now described. In the crossed roller bearing 1, at least one of a set of the inner peripheral surface 16a and the inner peripheral surface 26a, which are each an inner peripheral surface of the outer ring 1A, or a set of the outer peripheral surface 36a and the outer peripheral surface 46a, which are each an outer peripheral surface of the inner ring 1B, has a surface texture satisfying an aspect ratio Str of 0.2 or more and a root-mean-square height Sq of 0.5 µm or less. That is, at least one of a set of the rolling surfaces of the outer ring 1A or a set of the rolling surfaces of the inner ring 1B has the surface texture satisfying the aspect ratio Str of 0.2 or more and the root-mean-square height Sq of 0.5 µm or less. It is also preferred that both of the rolling surfaces of the outer ring 1A and the rolling surfaces of the inner ring 1B have the aspect ratio Str of 0.2 or more and the root-mean-square height Sq of 0.5 µm or less.

The aspect ratio Str is an index of isotropy in the surface texture. The aspect ratio Str is a surface roughness parameter specified in ISO 25178. An example of a specific measurement method is described later in Example. The aspect ratio Str has a value falling within a range of from 0 to 1. The aspect ratio Str of an isotropic surface has a value close to 1, and the aspect ratio Str of an anisotropic surface has a value close to 0.

The root-mean-square height Sq is a roughness index in the surface texture. The root-mean-square height is a surface roughness parameter specified in ISO 25178. An example of a specific measurement method is described later in Example. A larger value of the root-mean-square height Sq indicates that a surface is rougher and has a surface shape with protrusions.

The crossed roller bearing according to the present disclosure has a configuration in which the root-mean-square height Sq is 0.5 µm or less and the aspect ratio Str is 0.2 or more on the rolling surfaces of the outer ring and/or the rolling surfaces of the inner ring. It is preferred that the root-mean-square height Sq be 0.4 µm or less. Further, the root-mean-square height Sq may be 0.2 µm or more.

It has been considered that a smaller root-mean-square height Sq be preferred on the rolling surfaces of the crossed roller bearing. Further, hitherto, it has been known that, for example, highly accurate finishing such as superfinishing is performed as means of increasing surface accuracy. However, it has been practically difficult to reduce the root-mean-square height Sq to, for example, less than 0.2 µm in view of conditions such as a complex shape of a raceway ring of the crossed roller bearing or processing costs. Meanwhile, in the present disclosure, it has been found that, when both of the root-mean-square height Sq and the aspect ratio Str of the rolling surfaces of the crossed roller bearing fall within given ranges, the progress of fatigue on the rolling surfaces is suppressed and the crossed roller bearing having a long life is obtained. With the configuration described above, the crossed roller bearing having a long life is obtained by practically adoptable and rational means without reducing the root-mean-square height Sq to its lowest limit.

Further, for the crossed roller bearing 1, it is preferred that the rolling surfaces of the rollers 1C, that is, the outer peripheral surface 51a of the first roller 51 and the cylindrical outer peripheral surface of the second roller 52 have a surface texture satisfying the root-mean-square height Sq of 0.2 µm or less. When the surface texture of the rollers is set to fall within the above-mentioned range, the rolling surfaces of the inner ring and the outer ring, which are counterpart surfaces, are prevented from being adversely affected to thereby ensure a longer life for the crossed roller bearing.

### (Second Embodiment)

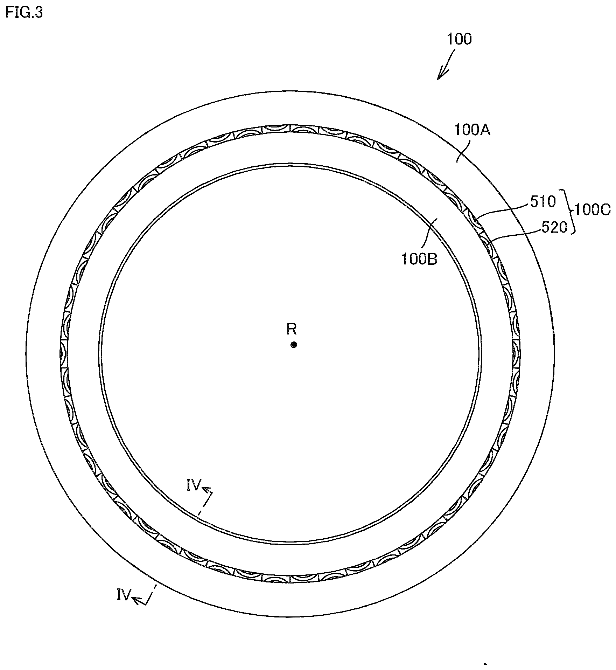

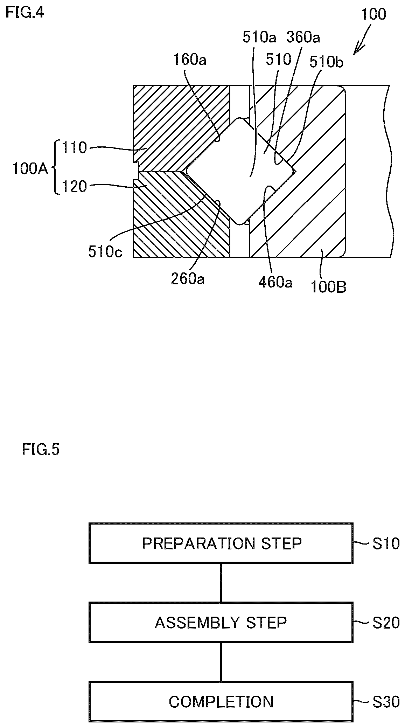

FIG. 3 is a schematic plan view for illustrating a structure of a crossed roller bearing 100, which is one example of the embodiment of the present disclosure. FIG. 4 is a partially enlarged sectional view for illustrating a cross section of the crossed roller bearing 100 taken along the line IV-IV in FIG. 3 in a partially enlarged manner. A plane containing the cross section taken along the line IV-IV includes a center axis R of the crossed roller bearing 100. The crossed roller bearing 100 is different from the crossed roller bearing 1 in configurations of an outer ring and an inner ring. The crossed roller bearing 100 may have a configuration in common with or similar to a publicly known crossed roller bearing except for a surface texture of rolling surfaces.

Specific dimensions of the crossed roller bearing 100 are not limited to any particular dimensions as long as the crossed roller bearing has the effects according to the present disclosure. Typically, the crossed roller bearing may have an outer ring with an outer diameter of from about 20 mm to about 250 mm and an inner ring with an inner diameter of from about 10 mm to about 200 mm. Further, a thickness in the axial direction is also not limited to any particular thickness, and may be, for example, from about 5 mm to about 30 mm.

An overview of the crossed roller bearing 100 is described. As illustrated in FIG. 3, the crossed roller bearing 100 includes an outer ring 100A having an annular shape, an inner ring 100B having an annular shape, and rollers 100C corresponding to a plurality of rolling elements inserted between the outer ring 100A and the inner ring 100B. The outer ring 100A and the inner ring 100B have the same center axis R. A direction in which the center axis R extends is referred to as "axial direction". The rollers 100C each have a cylindrical shape. The rollers 100C include first rollers 510 and second rollers 520, which are arranged alternately. In the crossed roller bearing 100, the first roller 510 and the second roller 520 that are adjacent to each other are arranged so that their axes of rolling are orthogonal to each other.

As illustrated in FIG. 4, the outer ring 100A includes a first outer ring 110 and a second outer ring 120, which are two divided rings obtained by division in the axial direction. The first outer ring 110 has an inner peripheral surface 160a corresponding to a first rolling surface. The second outer ring 120 has an inner peripheral surface 260a corresponding to a second rolling surface. The inner ring 100B is formed of one integrally formed member. The inner ring 100B includes, in an outer peripheral surface, an outer peripheral surface 360a corresponding to a third rolling surface and an outer peripheral surface 460a corresponding to a fourth rolling surface.

As illustrated in FIG. 4, the first roller 510 has an outer peripheral surface 510a having a cylindrical shape and end surfaces 510b and 510c, each having a circular shape, respectively at both ends of the outer peripheral surface 510a. The outer peripheral surface 510a of the first roller 510 is in contact with the inner peripheral surface 160a (first rolling surface) of the first outer ring 110 and the outer peripheral surface 460a (fourth rolling surface) of the inner ring 100B, and the first rollers 510 roll on the inner peripheral surface 160a and the outer peripheral surface 460a. The second roller 520 (FIG. 3) has the same shape as that of the first roller 510. The cylindrical outer peripheral surface of the second roller 520 is in contact with the inner peripheral surface 260a (second rolling surface) of the second outer ring 120 and the outer peripheral surface 360a (third rolling surface) of the inner ring 100B, and the second rollers 520 roll on the inner peripheral surface 260a and the outer peripheral surface 360a.

Also in the crossed roller bearing 100, at least one of a set of the inner peripheral surface 160a and the inner peripheral surface 260a, which are each an inner peripheral surface of the outer ring 100A, or a set of the outer peripheral surface 360a and the outer peripheral surface 460a, which are each an outer peripheral surface of the inner ring 100B, has a surface texture satisfying an aspect ratio Str of 0.2 or more and a root-mean-square height Sq of 0.5 µm or less. That is, at least one of the rolling surfaces of the outer ring 100A or the rolling surfaces of the inner ring 100B has a surface texture satisfying the aspect ratio Str of 0.2 or more and the root-mean-square height Sq of 0.5 µm or less. Both of the rolling surfaces of the outer ring 100A and the rolling surfaces of the inner ring 100B may have the aspect ratio Str of 0.2 or more and the root-mean-square height Sq of 0.5 µm or less.

### (First Method of Manufacturing Crossed Roller Bearing)

When the crossed roller bearing according to the present disclosure is a super slim type crossed roller bearing such as the crossed roller bearing 1 described above, the crossed roller bearing can be manufactured by progressive pressing of a steel plate having a given thickness. FIG. 5 shows a flow for illustrating steps in a method of manufacturing a crossed roller bearing according to the present disclosure. As illustrated in FIG. 5, members for forming the crossed roller bearing are first prepared (Step S10).

In the preparation step S10, an outer ring, an inner ring, and rolling elements are prepared. The outer ring includes, in an inner peripheral surface: a first rolling surface having an annular shape; and a second rolling surface, which has an annular shape, and has a center axis in common with the first rolling surface. The inner ring includes, in an outer peripheral surface: a third rolling surface having an annular shape; and a fourth rolling surface, which has an annular shape, and has a center axis in common with the third rolling surface. The outer ring, the inner ring, and the rolling elements may be prepared sequentially or concurrently. Further, the outer ring, the inner ring, and the rolling elements may be each collectively prepared in advance.

The step of preparing the outer ring includes a step of forming the first rolling surface and the second rolling surface by pressing a bright-finished cold-rolled steel plate. Specifically, a bright-finished cold-rolled steel plate is bent into a predetermined shape, is cut at a predetermined position, and is formed. After that, formed portions are cut off from the steel plate to thereby manufacture the first outer ring and the second outer ring. In a pressing process at the time of bending into a predetermined shape, the rolling surfaces are formed. In the forming, publicly known drawing press may be used. A cut portion may be subjected to burring. Further, after the press forming, carburizing, quenching, and tempering may be performed. Further, in order to remove heat treatment scale, barrel processing may be performed. The first outer ring and the second outer ring can be manufactured without being distinguished from each other. Any appropriate two or selected two outer ring members among a multiple number of manufactured outer ring members are combined into a pair and are fixed to each other to thereby form a single outer ring.

Bright finish is defined in JIS G 0203:2009 as "denoting a surface state of a cold-rolled steel plate and a steel band, which is a smoothly-finished glossy surface state of a steel plate achieved by rolling with a polished cold-rolling roll". As an example of a bright-finished cold-rolled steel plate, a cold-rolled steel plate having Sq of about 0.2 µm and Str of about 0.6 can be used.

The step of preparing the inner ring includes a step of forming the third rolling surface and the fourth rolling surface by pressing a bright-finished cold-rolled steel plate. Each of a first inner ring and a second inner ring can be manufactured by progressive pressing of a steel plate having a given thickness. Specifically, a slit is first formed in a plate material. Subsequently, after a rising portion is formed by drawing, a predetermined portion is cut. Then, formed portions are cut off from the plate material to thereby manufacture the first inner ring and the second inner ring. As in the manufacture of the outer ring, rolling surfaces are formed in the pressing process at the time of bending into a predetermined shape. In the forming, publicly known drawing press can be used. A cut portion may be subjected to burring. Further, after the press forming, carburizing, quenching, and tempering may be performed. Further, in order to remove heat treatment scale, barrel processing may be performed. The first inner ring and the second inner ring can be manufactured without being distinguished from each other. Any appropriate two or selected two inner ring members among a multiple number of manufactured inner ring members are combined into a pair and are fixed to each other to thereby form a single inner ring.

Rollers may be manufactured by a publicly known manufacturing method, or already manufactured rollers may be obtained for use. In order to obtain a desired surface texture, the outer peripheral surface may be polished by a publicly known method.

As a bright-finished cold-rolled steel plate used as a material, a bright-finished cold-rolled steel plate having a thickness of, for example, from about 0.3 mm to about 5 mm can be used.

Next, an assembly step is performed (Step S20). For the assembly step S20, a publicly known assembly procedure, which is adopted for crossed roller bearings, can be used. For example, the first inner ring and the second inner ring are first combined to form the inner ring. Next, the second outer ring is placed. Subsequently, the rollers are arranged side by side in a predetermined direction. After all the rollers are arranged, the first outer ring is combined and fixed. Through the above-mentioned procedure, the crossed roller bearing is obtained (Step S30).

When the outer ring and the inner ring are manufactured by pressing using a bright-finished cold-rolled steel plate, the outer ring and the inner ring that have the aspect ratio Str of 0.2 or more and the root-mean-square height Sq of 0.5 µm or less as a surface texture of the rolling surfaces can be obtained. The crossed roller bearing obtained by the above-mentioned manufacturing method is a crossed roller bearing having a long life with less progress of fatigue on the rolling surfaces.

### (Second Method of Manufacturing Crossed Roller Bearing)

When the crossed roller bearing according to the present disclosure is a crossed roller bearing such as the crossed roller bearing 100 described above, an outer ring and an inner ring are formed by using cutting or the like of a steel material as a publicly known method. In this manner, the outer ring and the inner ring can be obtained. Rolling surfaces of a related-art crossed roller bearing have been formed by grinding on the rolling surfaces in the circumferential direction. The crossed roller bearing according to the present disclosure is obtained by, for example, performing grinding on the rolling surfaces and then performing barrel polishing.

### (Modification Example)

The crossed roller bearing according to the present disclosure is not limited to that including the outer ring formed by combining outer ring members obtained by division in the axial direction. The outer ring and/or the inner ring may be formed of an integral member. A separator may be arranged between the rollers. Further, the rollers may be retained in a cage.

### (Example)

In order to examine the actions and effects obtained by the embodiments described above, the progress of fatigue in the crossed roller bearing was evaluated.

### [Evaluation Targets]

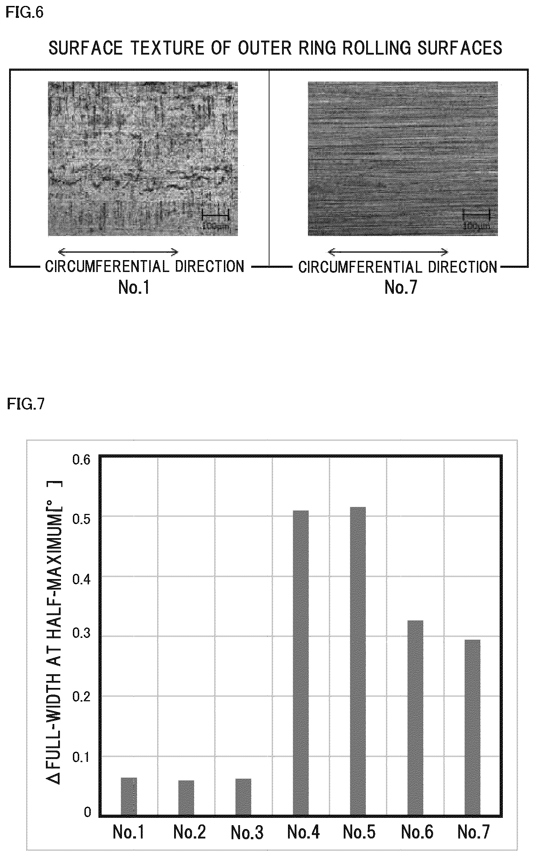

Crossed roller bearings No. 1 to No. 7 having surface textures (aspect ratio Str, root-mean-square height Sq) shown in Table 1 were used. The crossed roller bearings No. 1 to No. 3 are the crossed rollers according to the present disclosure and correspond to Examples. The crossed roller bearings No. 4 to No. 7 are Comparative Examples. FIG. 6 shows laser microscope images of outer ring rolling surfaces of the crossed roller bearings No. 1 and No. 7. In Table 1, oil-film parameters A are also shown for the crossed roller bearings No. 1 to No. 7. The oil-film parameter A is a value calculated when a base oil temperature of grease is set to 45°C.

### [Table 1]

**Table 1**

| | No. 1 | No. 2 | No. 3 | No. 4 | No. 5 | No. 6 | No. 7 | Rollers |
|---|---|---|---|---|---|---|---|---|
| Aspect ratio Str | 0.402 | 0.447 | 0.223 | 0.042 | 0.022 | 0.020 | 0.053 | 0.120 |
| Root-mean-square height Sq | 0.298 | 0.354 | 0.358 | 0.657 | 0.546 | 0.449 | 0.293 | 0.185 |
| Oil-film parameter A | 0.95 | 0.84 | 0.83 | 0.49 | 0.58 | 0.69 | 0.96 | - |

### (Preparation of Crossed Roller Bearings No. 1 to No. 7)

The crossed roller bearings No. 1 to No. 7 were all super slim type crossed roller bearings (outer diameter ϕ70 mm, inner diameter ϕ30 mm), and each included: an outer ring obtained by combining a pair of divided rings; an inner ring obtained by combining a pair of divided rings; and fifty rollers (ϕ3.2 mm×t3.14 mm). The rollers adjacent to each other in the circumferential direction were arranged sequentially in a raceway path defined between the inner ring and the outer ring so that rotation axes of the rollers intersected with each other. The crossed roller bearings had full roller specifications in which a separator was not arranged between the rollers.

The crossed roller bearings No. 1 to No. 7 were prepared as follows.

The outer ring and the inner ring were both manufactured by performing press forming, then carburizing, quenching, and tempering, and subsequently performing barrel processing on a bright-finished cold-rolled steel plate (SCM415, thickness of 1 mm). The rollers were made of SUJ2, and were subjected to through-hardening and then polishing. The above-mentioned outer ring, inner ring, and rollers were assembled to obtain the crossed roller bearings No. 1 to **No. 3.**

The crossed roller bearing No. 4 was obtained in the same way as that for the crossed roller bearing No. 1 except that the rolling surfaces of the outer ring were further polished in the circumferential direction with the use of emery paper #240.

The crossed roller bearing No. 5 was obtained in the same way as that for the crossed roller bearing No. 1 except that the rolling surfaces of the outer ring were further polished in the circumferential direction with the use of emery paper #320.

The crossed roller bearing No. 6 was obtained in the same way as that for the crossed roller bearing No. 1 except that the rolling surfaces of the outer ring were further polished in the circumferential direction with the use of emery paper #400.

The crossed roller bearing No. 7 was obtained in the same way as that for the crossed roller bearing No. 1 except that the rolling surfaces of the outer ring were further polished in the circumferential direction with the use of emery paper #600.

### (Measurement of Surface Texture)

The surface texture (aspect ratio Str, root-mean-square height Sq) was measured for the rolling surfaces of the outer rings of the crossed roller bearings No. 1 to No. 7 and the rollers. For the measurement, a profile measurement laser microscope (VK-X1000 manufactured by Keyence Corporation) was used. The measurement was performed at three positions, and an average value was calculated. Measurement conditions were set as follows.
- Objective lens: 20-power
- Filter: Gaussian filter
- S-filter: 2 µm
- L-filter: 0.8 µm

### (Fatigue Test)

A fatigue test was carried out for the crossed roller bearings No. 1 to No. 7. A specific procedure was as follows.

The inner ring of the crossed roller bearing was fixed. A pure moment load of 32.7 Nm was applied to the fixed inner ring, and the outer ring was rotated at 585 rpm. As a lubricant, 0.17 g (the amount corresponding to 50% of a spatial volume) of grease (Tribol (trademark) GR 100-2PD, base oil viscosity: 94.9 mm²/s at 40°C, 9.3 mm²/s at 100°C) was injected. At this time, a maximum contact pressure between the outer ring and the roller was 1.97 GPa by an elastic Hertzian contact calculation. In the calculation, an effective axial length of contact of the roller was set to 1.2 mm.

After the outer ring was rotated one million times, a full-width at half-maximum of the rolling surfaces of the roller was measured. For the measurement of the full-width at half-maximum, a residual stress measurement device (AutoMATEII manufactured by Rigaku Holdings Corporation (sin²ϕ method)) was used. Measurement conditions were set as follows.
- Characteristic X-ray: Cr-Kα
- Diffraction surface: α-Fe[211]
- X-ray tube bulb output: 40 kV/40 mA
- X-ray irradiation diameter: ϕ0.5
- X-ray irradiation time: 83 s
- ϕ angle: 0°, 24.1°, 35.3°, 45°

The measurement was performed at two positions in the axial direction for one roller, and the measurement was carried out for two rollers. That is, the measurement was performed at four positions for each crossed roller bearing, and an average value was calculated. Further, a full-width at half-maximum was similarly calculated for an unused roller. A full-width at half-maximum of a roller after being tested was subtracted from a full-width at half-maximum (5.841°) of an unused roller to obtain "Δ full-width at half-maximum". The obtained "Δ full-width at half-maximum" was used as an index of the degree of fatigue. It was determined that, as the full-width at half-maximum became smaller, fatigue progressed less.

The reason why the roller was measured was because the roller had Sq smaller than that of the rolling surfaces of the outer ring (see Table 1) and a coarser one (outer ring) applied fatigue to a finer one (roller). In Table 2, Δ full-width at half-maximum and the occurrence or non-occurrence of peeling were shown for each of the crossed roller bearings No. 1 to No. 7. In FIG. 7, the values of Δ full-width at half-maximum of the crossed roller bearings No. 1 to No. 7 are shown as a graph.

### [Table 2]

**Table 2**

| | No. 1 | No. 2 | No. 3 | No. 4 | No. 5 | No. 6 | No. 7 |
|---|---|---|---|---|---|---|---|
| Δ Full-width at half-maximum (°) | 0.064 | 0.059 | 0.062 | 0.509 | 0.515 | 0.326 | 0.294 |
| Occurrence of peeling | No | No | No | Yes | Yes | No | No |

As shown in Table 2, the crossed roller bearings No. 1 to No. 3 all had an extremely small Δ full-width at half-maximum (less than 0.1), and thus fatigue scarcely progressed. Meanwhile, in the crossed roller bearings No. 6 and No. 7, the full-width at half maximum decreased, and the Δ full-width at half-maximum was about 0.3. Further, in the crossed roller bearings No. 4 and No. 5, the full-width at half maximum significantly decreased. The Δ full-width at half-maximum was about 0.5, and peeling occurred. As shown in Table 1 and Table 2, the oil-film parameter was substantially the same for the crossed roller bearings No. 1 and No. 7. However, the crossed roller bearing No. 1 had a Δ full-width at half-maximum obviously smaller than that of the crossed roller bearing No. 7. That is, fatigue progressed less in the crossed roller bearing No. 1. It was considered that the progress of fatigue was suppressed under the effect of large Str.

It is to be understood that the embodiments disclosed herein are merely examples in all aspects and in no way intended to limit the present disclosure in any aspect. The scope of the present invention is defined by the appended claims and not by the above description, and it is intended that the present invention encompasses all modifications made within the scope and spirit equivalent to those of the appended claims.

### Reference Signs List

1, 100 crossed roller bearing, 1A, 100A outer ring, 1B, 100B inner ring, 1C, 100C roller, 10, 110 first outer ring, 11, 31 mounting hole, 12, 32 through hole, 13, 22, 33, 42 protruding portion, 15, 25, 35, 45 first portion, 16, 26, 36, 46 second portion, 17, 27, 37, 47 third portion, 20, 120 second outer ring, 30 first inner ring, 40 second inner ring, 51, 510 first roller, 52, 520 second roller

## Claims

1. A crossed roller bearing, comprising:
an outer ring made of steel;
an inner ring, which is made of steel, has a center axis in common with the outer ring, and is arranged on an inner periphery side of the outer ring; and
a plurality of rolling elements arranged so as to be rollable on an inner peripheral surface of the outer ring and an outer peripheral surface of the inner ring,
wherein the outer ring has:
a first rolling surface, which has an annular shape, and forms the inner peripheral surface of the outer ring; and
a second rolling surface, which has an annular shape, has a center axis in common with the first rolling surface, and forms the inner peripheral surface of the outer ring,
wherein the inner ring has:
a third rolling surface, which has an annular shape, has a center axis in common with the first rolling surface, is opposed to the second rolling surface, and forms the outer peripheral surface of the inner ring; and
a fourth rolling surface, which has an annular shape, has a center axis in common with the first rolling surface, is opposed to the first rolling surface, is connected to the first rolling surface through a line segment that intersects with a line segment connecting the second rolling surface and the third rolling surface to each other on a cross section including the center axis, and forms the outer peripheral surface of the inner ring,
wherein the rolling elements include:
first rollers arranged so as to be rollable on the first rolling surface and the fourth rolling surface; and
second rollers arranged so as to be rollable on the second rolling surface and the third rolling surface, and
wherein at least one of a set of the first rolling surface and the second rolling surface or a set of the third rolling surface and the fourth rolling surface has a surface texture satisfying an aspect ratio Str of 0.2 or more and a root-mean-square height Sq of 0.5 µm or less.

2. The crossed roller bearing according to claim 1, wherein the rolling surface of each of the rolling elements has a surface texture satisfying a root-mean-square height Sq of 0.2 µm or less.

3. The crossed roller bearing according to claim 1 or 2, wherein each of the outer ring and the inner ring is formed of one bent steel plate.

4. A method of manufacturing a crossed roller bearing, the method comprising:
a step (1) of preparing:
an outer ring including, in an inner peripheral surface, a first rolling surface having an annular shape, and a second rolling surface that has an annular shape, and has a center axis in common with the first rolling surface;
an inner ring including, in an outer peripheral surface, a third rolling surface having an annular shape, and a fourth rolling surface that has an annular shape, and has a center axis in common with the third rolling surface; and
rolling elements being a plurality of rollers; and
a step (2) of obtaining a crossed roller bearing by combining the outer ring, the inner ring, and the plurality of rollers,
wherein the step (1) of preparing includes:
a step (a) of forming the first rolling surface and the second rolling surface by pressing a bright-finished cold-rolled steel plate; or
a step (b) of forming the third rolling surface and the fourth rolling surface by pressing a bright-finished cold-rolled steel plate.

5. The method of manufacturing a crossed roller bearing according to claim 4, wherein at least one of a set of the first rolling surface and the second rolling surface or a set of the third rolling surface and the fourth rolling surface of the crossed roller bearing obtained through the step (2) of obtaining the crossed roller bearing has a surface texture satisfying an aspect ratio Str of 0.2 or more and a root-mean-square height Sq of 0.5 µm or less.

6. The method of manufacturing a crossed roller bearing according to claim 4 or 5, the method further comprising:
after the step (a), a step of performing carburizing, quenching, and tempering and then barrel processing on the first rolling surface and the second rolling surface that have been formed by the pressing; or
after the step (b), a step of performing carburizing, quenching, and tempering and then barrel processing on the third rolling surface and the fourth rolling surface that have been formed by the pressing.
